# EUROPEAN PATENT APPLICATION

(11) **EP 3 725 603 A1**
(43) Date of publication of application: **21.10.2020**
(21) Application number: 18887624.7
(22) Date of filing: 02.02.2018
(51) Int. Cl.: B60S 5/06

(54) **FASTENER LOCKING AND UNLOCKING MECHANISM AND SYSTEM, AND OPERATING PLATFORM FOR VEHICLE BATTERY REPLACEMENT**

(30) Priority: 12.12.2017 CN 201711320086
(71) Applicant: Nio Nextev Limited, Hong Kong (CN)
(72) Inventor: BENGTSSON, Jan, Hong Kong (CN); LI, Nan, Hong Kong (CN); TIAN, Xiaotao, Hong Kong (CN); DING, Xikun, Hong Kong (CN); MA, Yongyue, Hong Kong (CN)
(74) Representative: Vossius & Partner Patentanwälte Rechtsanwälte mbB
(86) International application number: PCT/CN2018/075068
(87) International publication number: WO 2019/114124

(57) **Abstract**

Provided is a fastener locking/unlocking mechanism, comprising a locking head (1) adapted to a fastener to perform a locking or unlocking operation; a power portion, which is connected to the locking head (1) to apply a torque to the fastener via the locking head (1), and which is calibrated with a correspondence relationship between a control signal and the torque; a control portion, which is configured to output to the power portion a control signal corresponding to a set target torque, to detect a current torque experienced by the power portion due to a reaction of the fastener and convert the current torque into a corresponding control signal, and to determine, by comparing the output control signal with the converted control signal, whether the target torque has locked or unlocked the fastener to a set target position. The locking/unlocking mechanism enables more stable, reliable and efficient locking and unlocking operations for the fastener. In addition, further provided are a fastener locking/unlocking system for vehicle battery swapping, and a vehicle battery swap operating platform.

## Description

### Technical Field

The invention relates to the technical field of vehicles, and in particular to a fastener locking/unlocking mechanism, a fastener locking/unlocking system for vehicle battery swapping, and a vehicle battery swap operating platform.

### Background Art

At present, there are many studies on locking and unlocking operations on fasteners, and people have proposed a variety of solutions in this regard. These solutions in the prior art each have advantages and disadvantages, and in general, the following two aspects are more prominent: on the one hand, although a tightening shaft of a torque gun is reliable in performance and flexible to control, the cost is high; and on the other hand, although ordinary electric or pneumatic wrenches have an advantage in price, the reliability thereof is relatively poor; and the reliability of using such wrenches for locking and unlocking fasteners is not high, and the wrenches also have a problem of relatively high wear.

In the vehicle industry, with the increasingly widespread use of various types of new energy vehicles such as electric vehicles and hybrid vehicles, technologies involving fast battery swapping etc. have also attracted more and more attention and research efforts of people. Although a variety of battery swap modes are available at present, there are still some problems in an operation of locking or unlocking a fastener for a battery pack, such as unstable identification of a nut by the fastener, poor disassembly stability, unreliable locking and unlocking torques, problem of missing the turning of a fastener or wrongly turning same, and high costs of the torque gun. Therefore, it is fairly necessary to carry out adequate studies on the existing problems or defects including those mentioned above, so as to make improvements.

### Summary of the Invention

In view of this, the invention provides a fastener locking/unlocking mechanism, a fastener locking/unlocking system for vehicle battery swapping, and a vehicle battery swap operating platform, thereby effectively solving the above problems and other problems existing in the prior art.

Firstly, according to a first aspect of the invention, there is provided a fastener locking/unlocking mechanism, comprising a locking head adapted to a fastener to perform a locking or unlocking operation, wherein the fastener locking/unlocking mechanism further comprises:
a power portion, which is connected to the locking head to apply a torque to the fastener via the locking head, and which is calibrated with a correspondence relationship between a control signal and the torque; and
a control portion, which is configured to output to the power portion a control signal corresponding to a set target torque, to detect a current torque experienced by the power portion due to a reaction of the fastener and convert the current torque into a corresponding control signal, and to determine, by comparing the output control signal with the converted control signal, whether the target torque has locked or unlocked the fastener to a set target position.

In the fastener locking/unlocking mechanism according to the invention, optionally, the power portion comprises a servo motor and a speed reducer, an output end of the servo motor is connected to an input end of the speed reducer to output a torque to the speed reducer, and an output end of the speed reducer is connected to the locking head so as to apply the torque increased due to a reduction of speed to the fastener via the locking head; and
the control portion comprises a first controller and a servo controller, wherein the first controller outputs a control signal corresponding to the target torque to the servo controller; the servo controller outputs the control signal to the servo motor to operate same, detects the current torque experienced by the servo motor, converts the current torque into a corresponding control signal and sends same to the first controller; and the first controller compares the output control signal with the converted control signal to determine whether the target torque has locked or unlocked the fastener to the target position.

In the fastener locking/unlocking mechanism according to the invention, optionally, the control portion is further configured to determine whether a difference between the output control signal and the converted control signal exceeds a set allowable error range; if yes, it is determined that the target torque has failed to lock or unlock the fastener to the target position, and thus it is determined that an abnormality occurs in the locking or unlocking operation; and if not, it is determined that the target torque has locked or unlocked the fastener to the target position, and thus it is determined that the locking or unlocking operation has been completed successfully.

In the fastener locking/unlocking mechanism according to the invention, optionally, the control portion is further configured to start abnormality processing after it is determined that the abnormality occurs in the locking or unlocking operation, the abnormality processing comprising at least data storage, and the data comprising the current torque experienced by the power portion, a current angular position of the power portion under the action of the torque, and a current angular position of the locking head under the action of the torque.

In the fastener locking/unlocking mechanism according to the invention, optionally, the control portion is further configured to start data storage after determining whether the target torque has locked or unlocked the fastener to the set target position, the data comprising the current torque experienced by the power portion, a current angular position of the power portion under the action of the torque, and a current angular position of the locking head under the action of the torque.

In the fastener locking/unlocking mechanism according to the invention, optionally, the control signal is a voltage signal or a current signal.

In the fastener locking/unlocking mechanism according to the invention, optionally, the fastener is a bolt or a nut.

Secondly, according to a second aspect of the invention, there is provided a fastener locking/unlocking system for vehicle battery swapping, which comprises one or more fastener locking/unlocking mechanisms as described in any of the above, the fastener locking/unlocking mechanism being configured to lock or unlock a fastener on a battery pack of the vehicle.

In addition, according to a third aspect of the invention, there is also provided a fastener locking/unlocking system for vehicle battery swapping, comprising:
a plurality of locking heads, which are adapted to fasteners on a battery pack of a vehicle to perform a locking or unlocking operation;
a plurality of power portions, wherein each power portion comprises a servo motor and a speed reducer, an output end of the servo motor is connected to an input end of the speed reducer to output a torque to the speed reducer, an output end of the speed reducer is connected to one of the locking heads so as to apply the torque increased due to a reduction of speed to the fastener via the locking head, and the servo motor and the speed reducer are together calibrated with a correspondence relationship between a control signal and the torque; and
a first controller and a plurality of servo controllers, wherein the plurality of servo controllers are respectively connected to the servo motors in the plurality of power portions in one-to-one correspondence; the first controller is connected to the plurality of servo controllers in a bus mode, to output a control signal corresponding to a set target torque to each servo controller; each servo controller outputs the control signal to the corresponding servo motor for outputting a corresponding torque, detects a current torque experienced by the servo motor due to a reaction of the fastener, and converts the current torque into a corresponding control signal and sends same to the first controller; and the first controller compares the output control signal with the converted control signal acquired from each of the servo controllers one by one to determine whether the target torque has locked or unlocked each fastener to the target position.

In the fastener locking/unlocking system for vehicle battery swapping according to the invention, optionally, the first controller is further configured to determine whether a difference between the output control signal and one of the converted control signals exceeds a pre-set allowable error range; if yes, it is determined that the target torque has failed to lock or unlock the corresponding fastener to the target position, and thus it is determined that an abnormality occurs in the locking or unlocking operation; and if not, it is determined that the target torque has locked or unlocked the fastener to the target position, and thus it is determined that the locking or unlocking operation has been completed successfully.

In the fastener locking/unlocking system for vehicle battery swapping according to the invention, optionally, the control portion is further configured to start abnormality processing after it is determined that the abnormality occurs in the locking or unlocking operation, the abnormality processing comprising at least data storage, and the data comprising the current torque experienced by each servo motor, a current angular position of each servo motor under the action of the torque, and a current angular position of each locking head under the action of the torque.

In the fastener locking/unlocking system for vehicle battery swapping according to the invention, optionally, the control portion is further configured to start data storage after determining whether the target torque has locked or unlocked the fastener to the set target position, the data comprising the current torque experienced by each servo motor, a current angular position of each servo motor under the action of the torque, and a current angular position of each locking head under the action of the torque.

In the fastener locking/unlocking system for vehicle battery swapping according to the invention, optionally, the bus mode includes RS485, CAN, BUS, Profibus, and HART.

In the fastener locking/unlocking system for vehicle battery swapping according to the invention, optionally, the control signal is a voltage signal or a current signal.

In the fastener locking/unlocking system for vehicle battery swapping according to the invention, optionally, the fastener is a bolt or a nut.

In addition, according to a fourth aspect of the invention, there is also provided a vehicle battery swap operating platform, comprising the fastener locking/unlocking system for vehicle battery swapping provided according to the second aspect of the invention; or comprising any of the fastener locking/unlocking systems for vehicle battery swapping provided according to the second aspect of the invention, the number of locking heads in the fastener locking/unlocking system being not less than that of fasteners on a battery pack of a vehicle such that the locking heads are used to execute the operation of locking or unlocking the fasteners.

The invention innovatively provides the technical solutions of fastener locking and unlocking in which not only there is no need to arrange components such as a torque sensor, but also the locking and unlocking operations on the fastener can be ensured to be more stable, reliable and efficient. In addition, data recording in the whole locking or unlocking operation process can also be implemented, and thus various problems in the prior art are effectively solved, such as unstable identification of a nut by the fastener, poor disassembly stability, unreliable locking and unlocking torques, missing the turning of the fastener or wrongly turning same, and high costs of the torque gun. By means of the solutions of the invention, the locking or unlocking operations of a plurality of fasteners can be executed simultaneously, and a corresponding detection and determination mechanism and a corresponding abnormality processing strategy are also provided.

### Brief Description of the Drawings

The technical solution of the invention will be further described in detail below with reference to accompanying drawings and embodiments. However, it should be understood that these accompanying drawings are designed for the purpose of illustration only and therefore are not intended to limit the scope of the invention. In addition, unless otherwise specified, these accompanying drawings are intended to be merely conceptually illustrative of the structural configurations described herein, and are not necessarily drawn to scale.
Fig. 1 is a schematic perspective structural view of an embodiment of a fastener locking/unlocking system for vehicle battery swapping according to the invention.
Fig. 2 is a schematic partial perspective exploded structural view of a vehicle battery swap operating platform with the embodiment shown in Fig. 1 being arranged therein.

### Detailed Description of Embodiments

First of all, it should be noted that the structural configurations, compositions, features, advantages etc. of a fastener locking/unlocking mechanism, a fastener locking/unlocking system for vehicle battery swapping, and a vehicle battery swap operating platform according to the invention will be specifically described below by way of example. However, all the descriptions are for the purpose of illustration only and should not be construed as limiting the invention in any way.

In addition, with respect to any single technical feature described or implied in the embodiments described herein, or any single technical feature shown or implied in the drawings, the invention further allows for any combination or deletion of these technical features (or equivalents thereof) to be made, to obtain still other additional embodiments of the invention which may not be directly mentioned herein. Additionally, in order to simplify the figures, the same or similar parts and features may only be marked at one or several places in one and the same figure.

According to the design concept of the invention, an innovative fastener locking/unlocking mechanism different from the existing mechanism is provided first. The fastener locking/unlocking mechanism comprises a locking head, a power portion and a control portion, which will be described in detail below.

Specifically, the locking head and a fastener are adapted to each other in structure, so as to lock or unlock the fastener. In general, as the fastener is more often in the form of a bolt or a nut in practical use, the locking head can accordingly be configured in the form of a socket of a simple structure. Of course, if the fastener is in other structural forms, the locking head may also be configured to have a corresponding structure such that the locking head can match the fastener to perform the locking and unlocking operations.

In the fastener locking/unlocking mechanism according to the invention, the power portion is used to provide a torque for locking and unlocking the fastener, and is connected to the aforementioned locking head so as to apply the torque to the fastener via the locking head. The above power portion is calibrated, that is, according to the solution of the invention, a correspondence relationship between a control signal and the torque has been pre-calibrated in the power portion. As an electric motor is widely used as a power source in many practical applications, electrical signals such as voltage signals and current signals can be very conveniently used as control signals to correlate the power source with the torque. Generally, these aforementioned calibration data may be obtained by using an experimental method, of course, may also be obtained directly from technical manuals, technology manufacturers, etc.

The aforementioned control portion provides a corresponding control function in the fastener locking/unlocking mechanism according to the invention. Specifically, the control portion is configured to first output a control signal to the power portion, and the control signal corresponds to a set target torque (i.e., through the action of the target torque, the fastener is locked or unlocked to a desired corresponding target position), such that the calibrated power portion outputs externally the target torque corresponding to the control signal. Then the control portion detects a current torque experienced by the power portion. This is because when the power portion applies the torque to the fastener via the locking head, the fastener will generate a reaction, such that the power portion will experience the aforementioned torque. The control portion will convert the detected torque into a control signal corresponding to the torque, and then compare the previously output control signal with the converted control signal to determine whether the aforementioned target torque has locked or unlocked the fastener to the set target position.

In the solution of the invention, according to different application situations, the control portion is allowed to use a plurality of possible determination modes to compare the output control signal with the converted control signal. For example, a method for directly determining whether the aforementioned output control signal and the converted control signal are equivalent may be used. As another example, a method for determining whether the difference between the aforementioned output control signal and the converted control signal exceeds a set allowable error range may also be used. Regarding the specific allowable error range, the numerical selection thereof is set according to the actual application requirements and is also allowed to be adjusted.

Further, in an optional case, the aforementioned control portion may also be designed to accomplish more functions, especially for forming a more perfect detection and determination mechanism, abnormality processing mechanism, etc.

For example, the control portion may be configured in such a way that, as mentioned above, if it is determined that a difference between the output control signal and the converted control signal has exceeded the set allowable error range, it may be determined that the target torque has failed to lock or unlock the fastener to the target position, and thus it is determined that an abnormality has occurred in the locking or unlocking operation. Such an abnormality may be caused by a variety of situations such as jamming and thread stripping of fasteners such as bolts or nuts. In contrast to the above, if the result of the determination is that the difference between the output control signal and the converted control signal does not exceed the set allowable error range, it can be determined that the target torque has successfully locked or unlocked the fastener to the target position, and thus it is determined that the operation of locking or unlocking the fastener has been completed successfully.

In addition, optionally, the control portion may be further configured to start abnormality processing after it is determined that the abnormality has occurred in the locking or unlocking operation. Such abnormality processing can be flexibly set according to actual application requirements, for example, providing audible and visual alarms, and shutting down equipment. By way of illustration, based on fastener service life monitoring, data tracking, etc., the abnormality processing may comprise data storage, that is, these data can be stored in a local storage medium and/or uploaded to a remote storage medium, such as a local workstation server and a cloud server. The above data include but are not limited to the current torque experienced by the power portion, a current angular position of the power portion under the action of the torque, a current angular position of the locking head under the action of the torque, etc.

Of course, in the solution of the invention, the storage of data is also not only limited to after it has been detected and determined that the abnormality has occurred in the locking or unlocking operation. In an optional case, based on the formation of a more complete data record etc., the control portion may be configured to start the data storage regardless of whether the locking or unlocking operation has been completed successfully. Similarly, the above data include but are not limited to the current torque experienced by the power portion, a current angular position of the power portion under the action of the torque, a current angular position of the locking head under the action of the torque, etc.

As mentioned above, since the invention innovatively uses the above technical solutions, the operation of locking or unlocking the fastener can be very direct, stable, reliable and highly efficient. In particular, components such as a torque sensor can be completely omitted, thereby not only being conductive to enhancing the reliability of the system and making the structure thereof more compact, but also reducing manufacturing and maintenance costs. At the same time, the invention also provides a perfect detection and determination mechanism and abnormality processing mechanism for the operation of locking or unlocking the fastener, thereby providing the fastener service life monitoring and data tracking capabilities.

According to the actual application requirements, one or more fastener locking/unlocking mechanisms according to the invention may be arranged in a device, an apparatus or a system to lock or unlock a corresponding number of fasteners. For example, the fastener locking/unlocking mechanisms are applied to vehicle battery swap operation, and thus a fastener locking/unlocking system for vehicle battery swapping is provided.

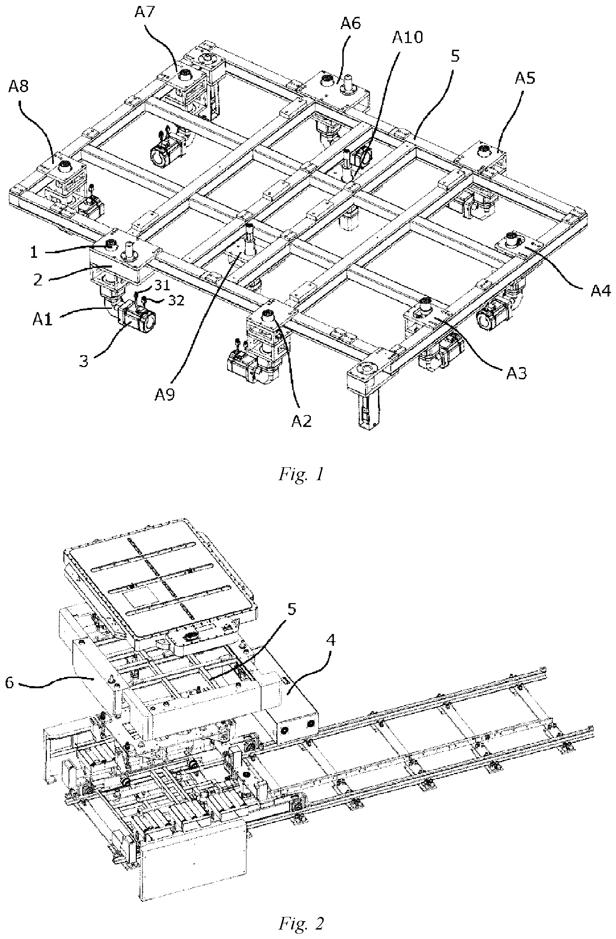

For a better understanding of the invention, a more detailed description will be given of the embodiments shown in Figs. 1 and 2. Fig. 1 shows, by way of example only, the general structural configuration of an embodiment of a fastener locking/unlocking system for vehicle battery swapping according to the invention; and Fig. 2 schematically shows a partial perspective exploded structure of a vehicle battery swap operating platform with the aforementioned embodiment being arranged therein.

As shown in Fig. 1, in the fastener locking/unlocking system 5 for vehicle battery swapping, a total of ten fastener locking/unlocking mechanisms A1 to A10 (which share a controller 4 shown in Fig. 2) are provided such that ten fasteners (such as bolts and nuts) mounted, by way of illustration only, on a battery pack of a vehicle are locked or unlocked via the fastener locking/unlocking mechanisms.

For the convenience of description, the following will only select one A1 of the fastener locking/unlocking mechanisms for detailed description. The following description is also applicable to the other fastener locking/unlocking mechanisms A2 to A10, so the description of the latter will not be repeated.

In this example, the fastener locking/unlocking mechanism A1 comprises a locking head 1, a speed reducer 2, a servo motor 3, and a servo controller (not shown). The servo controller is connected to the servo motor 3 via connecting wires 31, 32 on the servo motor 3, and the servo controller is also connected to the controller 4 shown in Fig. 2 in a bus mode.

In the fastener locking/unlocking mechanism A1, the servo motor 3 and the speed reducer 2 together act as the power portion and realize the function thereof. Specifically, an output end of the servo motor 3 is connected to an input end of the speed reducer 2 to output a torque to the speed reducer 2, and an output end of the speed reducer 2 is connected to the locking head 1 so as to apply, via the locking head 1, the torque increased by the speed reducer 2 to the respective fastener installed on the battery pack of the vehicle. Since the torque, which is output from the servo motor 3 after the reduction of speed at the speed reducer 2, further increases, the greater torque can be applied to the respective fastener on the battery pack of the vehicle via the locking head 1. It is to be understood that in this example, since the servo motor 3 and the speed reducer 2 jointly act as the power portion, the servo motor and the speed reducer are calibrated together. The calibration data concerning the correspondence relationship between the torque and the control signal is stored in the servo motor 3.

Referring to Fig. 2 again, the controller 4 is an important control component in the fastener locking/unlocking system 5 for vehicle battery swapping. The controller may be implemented by using a device such as a PLC and may also be allowed to be implemented by using software, other hardware, or a combination thereof. The controller 4 is connected to each servo controller in the fastener locking/unlocking mechanisms A1 to A10 in a bus mode (such as RS485, CAN, BUS, Profibus, HART), so that the operation of locking or unlocking the fasteners on the battery pack can be advantageously performed synchronously, and the phenomenon of missing the turning of these fasteners or wrongly turning same is prevented, so that the fasteners have a higher and more efficient dismantling stability and are also locked and attached to the battery pack more reliably. The controller 4 is used to output the control signal corresponding to the set target torque to these servo controllers simultaneously, and then each servo controller outputs the control signal to the respective servo motor in the fastener locking/unlocking mechanisms A1 to A10. By means of the calibration data in these calibrated servo motors, corresponding torques are output simultaneously externally, then each servo controller detects the current torque experienced by the respective servo motor due to the reaction of the respective fastener on the battery pack of the vehicle, and each servo controller then converts the respective detected current torque into a corresponding control signal and sends same to the controller 4. Subsequently, the controller 4 compares the previously output control signal with the converted control signal obtained from each of the servo controllers one by one, to determine whether the aforementioned target torques have locked or unlocked the ten fasteners on the battery pack of the vehicle to the target positions.

Since the contents such as the detection and determination mechanism and the abnormality processing mechanism used by the fastener locking/unlocking mechanism according to the invention have been described above in detail, for how to set the aforementioned controller 4 to implement these contents, a reference can be made to the detailed description at the corresponding part above, which will not be repeated herein. Of course, it should be noted that since a plurality of fasteners are usually arranged on the battery pack of the vehicle, all the relevant data during the operation of locking or unlocking the fasteners can be stored, thereby forming perfect fastener service life monitoring and data tracking capabilities.

In addition, according to another technical solution of the invention, a vehicle battery swap operating platform is also provided. The vehicle battery swap operating platform provided according to the invention comprises the fastener locking/unlocking system for vehicle battery swapping as described above and designed according to the invention. For example, Fig. 2 illustrates such a fastener locking/unlocking system 5, which is arranged over a lifting mechanism 6 and in which ten fastener locking/unlocking mechanisms A1 to A10 (see Fig. 1) are illustratively arranged, and these fastener locking/unlocking mechanisms are connected via a bus and share the controller 4. The number of locking heads in the fastener locking/unlocking system is usually set to be equal to the number of fasteners on the battery pack of the vehicle, so as to perform the locking or unlocking operation on the fasteners by means of the engagement of the locking heads and the fasteners. Of course, in some cases, it is also conceivable that the number of locking heads is set to be larger than that of fasteners on the battery pack of the vehicle, thereby facilitating the use in situations such as emergency, maintenance or repair. Without departing from the subject matter of the present application, all the actual set number, positional arrangement, structure, shape and size of the locking heads may be specifically designed and selected according to the specific application.

The foregoing merely illustrates the fastener locking/unlocking mechanism, the fastener locking/unlocking system for vehicle battery swapping, and the vehicle battery swap operating platform according to the invention in detail by way of example. These examples are only used to illustrate the principles and embodiments of the invention and are not intended to limit the invention. Those skilled in the art can also make various modifications and improvements without departing from the spirit and scope of the invention. For example, in some embodiments of the fastener locking/unlocking mechanism, when the function of the power portion is achieved by both the servo motor 3 and the speed reducer 2 as described above, it may be contemplated that the controller 4 and the servo controller jointly implement the function of the control portion, and thus the fastener locking/unlocking system formed with the plurality of fastener locking/unlocking mechanisms is allowed to have a plurality of controllers 4. Therefore, all equivalent technical solutions should fall within the scope of the invention and be defined by the claims of the invention.

## Claims

1. A fastener locking/unlocking mechanism, comprising a locking head adapted to a fastener to perform a locking or unlocking operation, **characterized in that** the fastener locking/unlocking mechanism further comprises:
a power portion, which is connected to the locking head to apply a torque to the fastener via the locking head, and which is calibrated with a correspondence relationship between a control signal and the torque; and
a control portion, which is configured to output to the power portion a control signal corresponding to a set target torque, to detect a current torque experienced by the power portion due to a reaction of the fastener and convert the current torque into a corresponding control signal, and to determine, by comparing the output control signal with the converted control signal, whether the target torque has locked or unlocked the fastener to a set target position.

2. The fastener locking/unlocking mechanism according to claim 1, **characterized in that** the power portion comprises a servo motor and a speed reducer, an output end of the servo motor is connected to an input end of the speed reducer to output a torque to the speed reducer, and an output end of the speed reducer is connected to the locking head so as to apply the torque increased due to a reduction of speed to the fastener via the locking head; and
the control portion comprises a first controller and a servo controller, wherein the first controller outputs a control signal corresponding to the target torque to the servo controller; the servo controller outputs the control signal to the servo motor to operate same, detects the current torque experienced by the servo motor, converts the current torque into a corresponding control signal and sends same to the first controller; and the first controller compares the output control signal with the converted control signal to determine whether the target torque has locked or unlocked the fastener to the target position.

3. The fastener locking/unlocking mechanism according to claim 1, **characterized in that** the control portion is further configured to determine whether a difference between the output control signal and the converted control signal exceeds a set allowable error range; if yes, it is determined that the target torque has failed to lock or unlock the fastener to the target position, and thus it is determined that an abnormality occurs in the locking or unlocking operation; and if not, it is determined that the target torque has locked or unlocked the fastener to the target position, and thus it is determined that the locking or unlocking operation has been completed successfully.

4. The fastener locking/unlocking mechanism according to claim 3, **characterized in that** the control portion is further configured to start abnormality processing after it is determined that the abnormality occurs in the locking or unlocking operation, the abnormality processing comprising at least data storage, and the data comprising the current torque experienced by the power portion, a current angular position of the power portion under the action of the torque, and a current angular position of the locking head under the action of the torque.

5. The fastener locking/unlocking mechanism according to claim 1, **characterized in that** the control portion is further configured to start data storage after determining whether the target torque has locked or unlocked the fastener to the set target position, the data comprising the current torque experienced by the power portion, a current angular position of the power portion under the action of the torque, and a current angular position of the locking head under the action of the torque.

6. The fastener locking/unlocking mechanism according to any one of claims 1 to 5, **characterized in that** the control signal is a voltage signal or a current signal.

7. The fastener locking/unlocking mechanism according to any one of claims 1 to 5, **characterized in that** the fastener is a bolt or a nut.

8. A fastener locking/unlocking system for vehicle battery swapping, **characterized in that** the fastener locking/unlocking system comprises one or more fastener locking/unlocking mechanisms according to any one of claims 1 to 7, the fastener locking/unlocking mechanism being configured to lock or unlock a fastener on a battery pack of a vehicle.

9. A fastener locking/unlocking system for vehicle battery swapping, **characterized in that** the fastener locking/unlocking system comprises:
a plurality of locking heads, which are adapted to fasteners on a battery pack of a vehicle to perform a locking or unlocking operation;
a plurality of power portions, wherein each power portion comprises a servo motor and a speed reducer, an output end of the servo motor is connected to an input end of the speed reducer to output a torque to the speed reducer, an output end of the speed reducer is connected to one of the locking heads so as to apply the torque increased due to a reduction of speed to the fastener via the locking head, and the servo motor and the speed reducer are together calibrated with a correspondence relationship between a control signal and the torque; and
a first controller and a plurality of servo controllers, wherein the plurality of servo controllers are respectively connected to the servo motors in the plurality of power portions in one-to-one correspondence; the first controller is connected to the plurality of servo controllers in a bus mode, to output a control signal corresponding to a set target torque to each servo controller; each servo controller outputs the control signal to the corresponding servo motor for outputting a corresponding torque, detects a current torque experienced by the servo motor due to a reaction of the fastener, and converts the current torque into a corresponding control signal and sends same to the first controller; and the first controller compares the output control signal with the converted control signal acquired from each of the servo controllers one by one to determine whether the target torque has locked or unlocked each fastener to the target position.

10. The fastener locking/unlocking system for vehicle battery swapping according to claim 9, **characterized in that** the first controller is further configured to determine whether a difference between the output control signal and one of the converted control signals exceeds a pre-set allowable error range; if yes, it is determined that the target torque has failed to lock or unlock the corresponding fastener to the target position, and thus it is determined that an abnormality occurs in the locking or unlocking operation; and if not, it is determined that the target torque has locked or unlocked the fastener to the target position, and thus it is determined that the locking or unlocking operation has been completed successfully.

11. The fastener locking/unlocking system for vehicle battery swapping according to claim 10, **characterized in that** the control portion is further configured to start abnormality processing after it is determined that the abnormality occurs in the locking or unlocking operation, the abnormality processing comprising at least data storage, and the data comprising the current torque experienced by each servo motor, a current angular position of each servo motor under the action of the torque, and a current angular position of each locking head under the action of the torque.

12. The fastener locking/unlocking system for vehicle battery swapping according to claim 9, **characterized in that** the control portion is further configured to start data storage after determining whether the target torque has locked or unlocked the fastener to the set target position, the data comprising the current torque experienced by each servo motor, a current angular position of each servo motor under the action of the torque, and a current angular position of each locking head under the action of the torque.

13. The fastener locking/unlocking system for vehicle battery swapping according to claim 9, **characterized in that** the bus mode includes RS485, CAN, BUS, Profibus, and HART.

14. The fastener locking/unlocking system for vehicle battery swapping according to any one of claims 9 to 13, **characterized in that** the control signal is a voltage signal or a current signal.

15. The fastener locking/unlocking system for vehicle battery swapping according to any one of claims 9 to 13, **characterized in that** the fastener is a bolt or a nut.

16. A vehicle battery swap operating platform, **characterized by** comprising a fastener locking/unlocking system for vehicle battery swapping according to claim 8; or comprising a fastener locking/unlocking system for vehicle battery swapping according to any one of claims 9 to 15, the number of locking heads in the fastener locking/unlocking system being not less than that of fasteners on a battery pack of a vehicle such that the locking heads are used to execute the operation of locking or unlocking the fasteners.
